# EUROPEAN PATENT SPECIFICATION

(11) **EP 2 797 982 B1**
(45) Date of publication and mention of the grant of the patent: **31.05.2017**
(21) Application number: 12821100.0
(22) Date of filing: 28.12.2012
(51) Int. Cl.: C08G 63/16, C08G 63/85

(54) **PROCESS FOR THE PRODUCTION OF POLY(ETHYLENE 2,5-FURANDICARBOXYLATE) FROM 2,5-FURANDICARBOXYLIC ACID AND USE THEREOF, POLYESTER COMPOUND AND BLENDS THEREOF**
VERFAHREN ZUR HERSTELLUNG VON POLY(ETHYLEN-2,5-FURANDICARBOXYLAT) AUS 2,5-FURANDICARBONSÄURE UND VERWENDUNG DAVON, POLYESTERHARZVERBINDUNG UND MISCHUNGEN DARAUS
PROCEDE POUR LA PRODUCTION DE POLY(2,5-FURANEDICARBOXYLATE D'ETHYLENE) A PARTIR D'ACIDE 2,5-FURANEDICARBOXYLIQUE ET SON UTILISATION, COMPOSE POLYESTER ET MELANGES DE CELUI-CI.

(30) Priority: 29.12.2011 FR 1162539
(43) Date of publication of application: 05.11.2014
(73) Proprietor: Natura Cosméticos S.A., 05106-000 São Paulo SP (BR)
(72) Inventor: SAYWELL, Christopher, Sheffield S10 1QY (GB); MAI, Shaomin, Fulwood Sheffield S10 4DN (GB); CAPELAS ROMEU, Clarissa, Barueri - SP (BR); LEGRAMANTI NEVES, Julio Cesar, 05089-040 - São Paulo - SP (BR)
(74) Representative: Brady, Paul Andrew
(86) International application number: PCT/BR2012/000545
(87) International publication number: WO 2013/097013

(56) References cited:
- JP-A- 2008 291 244
- JP-A- 2009 227 717
- JP-A- 2010 280 767
- MOORE J A ET AL: "POLYESTERS AND POLYAMIDES CONTAINING ISOMERIC FURAN DICARBOXYLIC ACIDS", POLYMER SCIENCE AND TECHNOLOGY, PLENUM PRESS, US, vol. 31, 1 January 1985 (1985-01-01), pages 51-91, XP009116061, ISSN: 0093-6286 ISBN: 978-0-306-42467-0

## Description

The present invention generally concerns polyester compounds derived from renewable monomeric materials and manufacturing process therefor. The invention further pertains to polyester blends presenting improved maximum elongation characteristic.

### BACKGROUND OF THE INVENTION

Numerous efforts have been done seeking to provide renewable polymers to replace petroleum derivatives, such as polyethylene terephthalate (PET). PET is presently widely used in numerous applications, especially packaging.

Whatever the nature of the replacement material, some requirements must be complied with, such as processability by injection and blow molding techniques, chemical resistance, optical clarity, etc., which hinder developments.

In this sense, renewable source derived polymers are highly desired. In the attempt to provide renewable polymers, furan dicarboxylic acid (FDCA) has been proposed as a potential compound to replace terephthalic acid, resulting in the furan based counterpart of PET by copolymerization of FDCA with diols. Furan polyesters obtained by reaction of FDCA or esters thereof with diols or polyols using esterification and polycondensation steps were disclosed in patent documents US2551731 and US4876327. However, such a basic FDCA polymer does not comply with the requirements to replace or be blended with PET. Such prior art references do not teach mechanical characteristics or % elongation of the proposed polymers.

Improvements in the cited general process have also been disclosed. For instance, patent documents JP2008291243, JP2008291244, JP2009215467, WO2007052847, WO2008057220, WO2009118377 or WO2010077133 teach processes including specific monomers, catalysts and/or reaction conditions. These methods and products thereof have a number of disadvantages as well.For instance, prior art does not teach any polymer with adequate % elongation, useful to be used in oriented film applications or blends with petroleum derivatives polymers with thermal properties comparable to PET.

The parameter of maximum % elongation is important for film and packaging applications. Therefore, any improvement to the maximum % elongation of a copolymer predominantly derived from 2,5-FDCA and EG are sought.

Thus, there remains a need in the art for a renewable polymer material that can be used for partial or total replacement of PET.

### DESCRIPTION OF THE INVENTION

In order to overcome the prior art inconveniences, an improved route to synthetize a furan dicarboxylic acid (FDCA) copolymer was developed. The copolymer according to the present invention presents properties comparable to PET in terms of transparency, stability at high temperature, good mechanical properties and molding processability. In addition, the copolymer according to the present invention possesses a Young's Modulus and Yield Stress superior to PET, and lower % elongation.

Therefore, the present invention refers to a process for the production of poly(ethylene 2,5-furandicarboxylate) (PEF) from 2,5-furandicarboxylic acid (2,5-FDCA) comprising the steps of:
(1) esterification of 2,5- FDCA with diol (particularly ethylene glycol or EG) in the presence of 3,4-furandicarboxylic acid (3,4-FDCA) and triol (particularly tris hydroxy methyl propane or THMP) in the presence of at least one catalyst, such as titanium isopropoxide, in order to obtain a compound that is subsequently submitted to
(2) polycondensation in the presence of at least one catalyst, such as titanium isopropoxide and/or antimony oxide.
   2,5 Furan dicarboxylic acid is represented by the following formula: 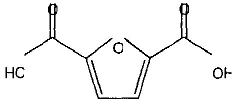 Dimethyl 3,4-furandicarboxylate is represented by the following formula:

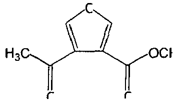

The use of specific comonomers controls the properties of the final product, particularly allowing application in bottles. THMP introduces branching in the chain of PEF for enhanced resistance to melting and extensional viscosity improvement, which is particularly important for extrusion and in the production of foamed trays.

Comonomer 3.4-FDCA improves the characteristics of crystallization (reduced crystallinity), allowing the production of a transparent material. The degree of crystallinity, glass transition temperature (Tg), extensional viscosity are important for film manufacture, for they impact on the film transparency, thermoforming temperature, sagging of thermoformed films, chemical resistance and the extrudability of films.

In addition, according to the present invention the 2,5-FDCA used in step (1) is previously purified.

Accordingly, the FDCA monomer is fractionated. In a particular embodiment the fractionation is carried out by adding concentrated HCl (33%) to adjust the pH of the solution to between 5-6 at which precipitation is observed. The solution is then stirred followed by filtration, in order to remove the first part of the precipitate. This fraction contains a small quantity of mono functional FDCA which would inhibit molecular weight building during polymerization. Concentrated HCl (33%) is again added into the solution until the pH of the solution reached to pH 1-2 and all FDCA is precipitated from solution. The solution is then cooled to 10°C before filtration.

The fractionation of the FDCA is important to remove monofunctional FDCA impurities which inhibit the polymerization of 2,5 FDCA.

After fractionation, the resulting product is washed. In a particular embodiment the resulting product is washed a total of 2 times with ice water and 5 times with water at room temperature in 1 L aliquots.

The washing step is important to remove salt after fractionation, as salt (NaCl) inhibits the polymerization.

The use of purified 2,5-FDCA provides controlled high molecular weight to the final polymer, i.e. in the region of 35,000 and 46,000gmol⁻¹. This molecular weight range is comparable to commercial PET and useful in the production of bottles. By contrast, the direct polycondensation without FDCA purification does not allow the production of esters of high molecular weight.

The poly(ethylene 2,5-furandicarboxylate) according to the invention presents the following characteristics:
- from about 90 to about 99 mol% of 2,5-FDCA and from about 1 to about 10mol% of 3,4-FDCA (diacid component), and from about 95 to about 99.8mol% EG and from about 5 to about 0.2 mol% THPM (diol component),
- Number average molecular weight number (Mn) of about 30,000 to 80,000, particularly 30,000 to 60,000
- Weight average molecular weight (Mw) of about 60,000 to about 240,000, particularly 70,000 to about 180,000,
- Polydispersity of about 2 to about 4, particularly 2.4 to about 3.8,
- Tg between 78-92°C.

The above mentioned characteristics are comparable to PET as to transparency, stability at high temperature, good mechanical properties and molding processability. In addition, PEF according to the present invention possesses a Young's Modulus and Yield Stress superior to PET and a lower % elongation.

The PEF of the invention may be subject to conventional processing methods in order to obtain films, bottles or pieces. In a particular embodiment the present invention also concerns the use of an additive ingredient, such as stabilizing additives that prevent the degradation and subsequent loss of qualities of the polymer during processing, such as oxidative stabilizers and hydrolysis stabilizers. These ingredients are common additives for PET.

In a particular aspect, the invention also refers to blends comprising the PEF as described above and a conventional polymer. The conventional polymer presents a melting point close to PEF, such as PET. The blends according to the present invention improve the maximum elongation of copolymers without limiting the thermal properties of the material, i.e. glass transition temperature and melting point.

In a particular embodiment the ratio (PEF: conventional polymer) ranges from about 99:1 (PEF:PET) to about 50:50 (PEF:PET). The blends provide improved mechanical characteristics and are particularly useful for application-oriented films (mono and bi-oriented). In this specific embodiment the maximum elongation (strain at break) of polyesters containing 2,5 FDCA according to the invention is substantially improved.

The polyester blends, more specifically polyester blends whose major component is a polyester derived from 2,5 FDCA and ethylene glycol, are useful for extrusion blown film, stretch blow molding and biaxially orientated film applications, and enable the production of films and sheets with improved maximum elongation values compared to the renewably sourced polyester alone.

The following examples are provided for illustration and are not intended as limitations to the scope of the present invention, other than what is described in the attached claims.

### EXAMPLES

### EXAMPLE 1

### PURIFICATION OF 2,5 FDCA

600 g of crude FDCA were added to 4 liters of pure water. 600 g of NaOH water solution (50: 50 wt%) were added slowly to the FDCA solution whilst stirring. When the pH of the solution reached 5.5-6.5, the solution turned clear. The clear solution was deep brown in color. About 3 heaped tea-spoons of activated charcoal were then added to the solution. The solution was heated to 50-60 °C and stirred for 30 minutes. The solution was then run through a column with sand, Hyflo Super Cel® medium and silica beads to remove the charcoal. After filtering, the solution was clear with a slight yellow coloration.

The FDCA was then fractionated by adding concentrated HCl (33%) to adjust the pH of the solution to 5-6. At this stage, the solution became slightly cloudy. The solution was then stirred overnight before filtration to remove the first part of the precipitate. This fraction contains a small quantity of mono functional FDCA which would inhibit molecular weight building during polymerization.

Concentrated HCl (33%) was then added to the clear solution until the pH of the solution reached 1-2 and all FDCA precipitated from the solution. The solution was then cooled to 10 °C before filtration.

The FDCA was first washed twice with ice cold water then twice with water at room temperature. The FDCA was then washed once more with water at room temperature (total: washed with ice water 2 times and 5 times with water at room temperature).

The use of purified 2,5-FDCA provides controlled high molecular weight to the final polymer, i.e. number average molecular weights in the region of 35,000 and 46,000gmol-1. This molecular weight range is comparable to commercial PET and useful in the production of bottles. By contrast, the direct polycondensation without FDCA purification does not allow the production of esters of high molecular weight.

### EXAMPLE 2

### MANUFACTURE OF PEF SAMPLES

### ACCORDING TO THE PRESENT INVENTION

A general synthetic procedure for the direct polymerization of FDCA and ethylene glycol is given below, using titanium(IV) isopropoxide (Ti[OCH(CH3)2]4) and antimony (III)oxide (Sb2O3) as catalysts:

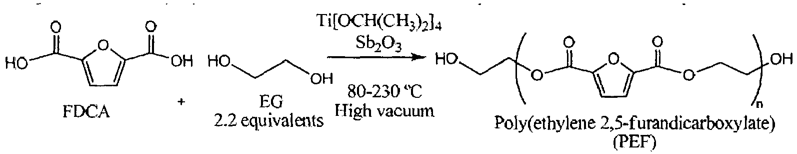

The reaction conditions employed for the preparation of PEF samples are comparable to conventional synthesis methods for PET and those skilled/of ordinary skill in the art would be able to select alternative catalysts suitable for the task. Several procedures for the polymerization of PEF are shown below:

### SAMPLE A

In the first step of esterification, FDCA (100.25 g, 0.64 mol), EG (122.0 g, 1.97 mol), triol (THMP, 0.4353 g, 0.494 mol% of FDCA), 3,4 FDCA-methyl ester (4.8243, 0.0262 mol, 4.08 mol% compared to FDCA), and titanium(IV) isopropoxide (0.491 g) were added to the system. The mixture was heated to 170 °C for about 1 hour, 180 °C for about 1 hour, 185 °C for about 1 hour and 190° C for 45 min. After which the reactants went clear.

In the second step of the polycondensation reaction, titanium (IV) isopropoxide (0.438 g) and Sb₂O₃ (0.313 g) were added into the system. For the final polymerization stage the reaction was heated at 240 °C for 5 hours.

### SAMPLE B

FDCA (100.15 g, 0.64 mol), EG (134.0, 1.73 mol), triol (THMP, 0.4381 g, 0.498 mol% of FDCA), Dimethyl 3,4-furandicarboxylate (5.1018, 0.0277 mol, 4.318 mol% compared to FDCA), titanium(IV) isopropoxide (0.4796 + 0.370 g), Sb₂O₃ (0.3034 g) were used. Stabilizers IRGANOX 1010 (0.0804 g) and IRGAFOS 168 (0.3290 g) were added in the second step of reaction (polycondensation).

### SAMPLE C

The properties of the pure poly(ethylene 3,4-furandicarboxylate) were verified. 3,4 FDCA (19.6513 g, 0.107mol), EG (21.9182 g, 0.353 mol), triol (THMP, 0.0784 g, 0.536 mol% of FDCA), titanium(IV) isopropoxide (0.1065 + 0.0650g), Sb2O3 (0.0676 g) were used.

### EXAMPLE 3

### COPOLYMER PROPERTIES

The determination of the number and weight average molecular weights and the molecular weight distribution (MWD) of the samples was performed using gel permeation chromatography. The instrument was calibrated with poly(methylmethacrylate) standards (PMMA). All molecular weights provided for the samples are PMMA equivalent molecular weights. The following conditions were employed:
Eluent: HFIP / 0.05M KTFAc
Columns: PSS-PFG, 7µm, 100Å, ID 8.0 mm x 300 mm
PSS-PFG, 7µm, 1000Å, ID 8.0 mm x 300 mm
Pump: Agilent 1200 HPLC-pump
Flow rate: 1.0 ml/min
Injector: Agilent 1200 Autosampler with 50 µl injection volume
Concentration: about 3.0 g/l
Temperature: 23 °C
Detectors: Agilent 1200 Differential Refractometer

Table below show the measured properties:

| Sample | Mn (gmol⁻¹) | Mw (gmol⁻¹) |
|---|---|---|
| A | 46,000 | 178,200 |
| B | 45,500 | 160,800 |
| C | 29,200 | 77,850 |

Control: conventional PET presents Mn 27,500 and Mw 66,440.

### EXAMPLE 4

### MECHANICAL PROPERTIES OF PEF SAMPLES

### (COMPRESSION MOULDED ONLY)

Sample B was compression molded, thus excluding the extrusion process and therefore minimizing the potential for thermal, thermo-oxidative and hydrolytic degradation.

Tensile tests were conducted on dog-bone shaped specimens, cut from a 110-130 µm polymeric film.

Polymeric films were obtained by compression molding at 250°C followed by quenching in cold water in order to suppress crystallinity.

Tensile tests were conducted at room temperature with an Instron 5566 equipped with a 1 kN load cell, pneumatic grips with rubber contact surface (35 psi closing pressure) and "Blue Hill" Software.

The tensile test results are shown below:

| Wt% Inclusion | Young's Modulus E (MPa) | Yield Stress σYield (Mpa) | Yield Strain εYield (%) | Strain at break, εMax (%) |
|---|---|---|---|---|
| Sample B (PEF) | 3437.9 | 62.5 | 2.0 | 2.8 |
| PET | 1840.0 | 46.3 | 3.6 | 216.1 |

From the test above one can observe that:
- PEF possesses a higher young's modulus and yield stress than commercial PET;
- PEF undergoes brittle fracture at -3% strain and therefore possesses similarities to polystyrene.

### EXAMPLE 5

### BLENDS

### POLYESTER COMPOSITIONS

| Composition | Diacid component | Diol Component |
|---|---|---|
| Sample A | 96 mol% 2,5 FDCA | 99.5 mol% ethylene glycol (EG) |
| | 4 mol% 3,4 FDCA | 0.5 mol% Tris hydroxy methyl propane (THMP) |
| Sample B | 100 mol% terephthalic acid (TA) | 95 mol% ethylene glycol (EG) |
| | | 5 mol% cyclohexane dimethanol (CHDM) |

### THERMAL PROPERTIES

Samples were analysed using a Perkin Elmer Pyris 1 DSC instrument.

| Composition | Tg (°C) | Tm (°C) | Tc (°C) |
|---|---|---|---|
| Sample A | 88 | 198 | 155 |
| Sample B | 78 | 242 | 155 |

From the test above one can observe that:
- Sample A possesses a higher Tg and, therefore, higher thermal stability than sample B.
- Sample A possesses a lower melting point than sample B and therefore a lower processing temperature, which will result in reduced processing costs and lower energy consumption than sample B.

### POLYESTER BLENDS

Four polyester formulations were prepared by blending, using a twin-screw extruder at 250°C, various proportions of Sample A and Sample B.

| Formulation | Polyester A (weight %) | Polyester B (weight %) | Transparent |
|---|---|---|---|
| 1 | 100 | 0 | Yes |
| 2 | 50 | 50 | Yes |
| 3 | 60 | 40 | Yes |
| 4 | 75 | 25 | Yes |

### MONOAXIAL ORIENTATION OF POLYESTER BLENDS

Three of the polyester formulations were subsequently monoaxially orientated by drawing at 100°C.

| Formulation | Draw Temperature (°C) | Linear Draw Ratio |
|---|---|---|
| 1 | 100 | 5 |
| 2 | 100 | 5 |
| 4 | 100 | 16 |

### MECHANICAL AND THERMAL PROPERTIES OF UNORIENTATED AND

### ORIENTATED POLYESTER FILMS

Tensile tests were conducted at room temperature with an Instron 5566 equipped with a 1 kN load cell, pneumatic grips with rubber contact surface (35 psi closing pressure) and "Blue Hill" software.

| Formulation | Draw Ratio | Young's Modulus E (MPa) | Yield Stress σYield (Mpa) | Yield Strain εYield (%) | Strain at break, εMax (%) | Tg (°C) | Tm (°C) |
|---|---|---|---|---|---|---|---|
| 1 | 0 | 3438 | 63 | 2.0 | 2.8 | 88 | 198 |
| 1 | 5 | 4800 | 120 | 3.2 | 6 | 88 | 198 |
| 2 | 0 | 2554 | 70 | 3.6 | 3.6 | 81 | 230 |
| 2 | 5 | 5700 | 140 | 3.6 | 21 | 81 | 230 |
| 4 | 0 | 2761 | 67 | 2.9 | 2.9 | 80 | 232 |
| 4 | 16 | 2760 | 58 | 3.0 | 100 | 80 | 232 |

The results above show that the blends according to the invention present:
- good mechanical properties (high Young's modulus and yield stress)
- acceptable strain at break after biaxial orientation (when blended with a copolyester and oriented using solid state drawing)
- Good thermal properties (High Tg and High Tm values)

Comparing the formulations one observes that:
Formulation 1 with a draw ratio of 0 possesses a low strain at break about 2.8%
Formulation 2 with a draw ratio of 5 possesses an acceptable strain at break about 20%
Formulation 4 with a draw ratio of 16 possesses a good strain at break about 100%.

Polyester blends for extrusion blown film, stretch blow molding and biaxially orientated film applications, more specifically polyester blends whose major component is a polyester derived from renewable sources and to which co-blending of this renewable polyester with a second polyester, followed by solid state drawing, enables the production of films and sheets with improved maximum elongations.

The information contained in the foregoing, as well as in the examples, allows a person skilled in the art to perform alternative embodiments not expressly described, but which perform the functions taught herein with the results revealed herein. Such equivalent embodiments are encompassed by the scope of the invention and are therefore covered by the claims presented further on.

## Claims

1. Process for the production of poly(ethylene 2,5-furandicarboxylate) from 2,5-furandicarboxylic acid comprising the steps of:
(1) esterification of 2,5- furandicarboxylic acid with ethylene glycol in the presence of 3,4-furandicarboxylic acid and triol in the presence of at least one catalyst in order to obtain a compound that is subsequently submitted to
(2) polycondensation in the presence of at least one catalyst.

2. Process, according to claim 1, wherein the triol used in the step (1) is tris hydroxy methyl propane, and/or wherein the catalyst used in steps (1) or (2) is titanium isopropoxide and/or antimony oxide.

3. Process, according to claim 1, wherein the 2,5- furandicarboxylic acid used in the step (1) is previously purified by fractionation and washing steps, preferably wherein the washing is carried out twice with ice water and five times with room temperature water.

4. Process, according to claim 3, wherein the fractionation is carried out by adjusting the pH to 5-6 and filtered to remove the first part of the precipitate.

5. Process, according to claim 4, comprising a second step wherein the solution is adjusted to pH 1-2 to obtain total precipitation, before cooling to 10°C and filtering to obtain purified 2,5 furandicarboxylic acid

6. Process, according to one of claims 4 or 5, wherein the pH is controlled by adding concentrated HCl.

7. Poly(ethylene 2,5-furandicarboxylate) obtained by the process according to one of claims 1 to 6.

8. Poly(ethylene 2,5-furandicarboxylate) according to claim 7 comprising a number average molecular weight (Mn) in the region of 35,000 and 46,000gmol⁻¹.

9. Poly(ethylene 2,5-furandicarboxylate), according to claim 7, comprising at least one of the following characteristics:
- from 90 to 99mol% of 2,5- furandicarboxylic acid and from 1 to 10mol% of 3,4- furandicarboxylic acid (diacid component), and from 95 to 99.8mol% ethylene glycol and from 5 to 0.2 mol% tris hydroxy methyl propane (diol component),
• Number average molecular weight number (Mn) of 30,000 to 80,000, particularly 30,000 to 60,000
• Weight average molecular weight (Mw) of 60,000 to 240,000, particularly 70,000 to 180,000,
• Polydispersity of 2 to 4, particularly 2.4 to 3.8,
• Tg between 78-92°C.

10. Polyester blends comprising the polymer according to one of claims 7 to 9 and at least one second polymer presenting melting point between 130 to 300°C; or polyethylene terephthalate.

11. Polyester blends, according to claim 10, wherein at least one second polymer presenting melting point between 180 to 260°C.

12. Polyester blends, according to one of claims 10 or 11, wherein the ratio between the polymer according to one of claims 7 to 9 and the second polymer ranges from about 99:1 by weight (poly(ethylene 2,5-furandicarboxylate:second polymer) to 50:50 by weight (poly(ethylene 2,5-furandicarboxylate:second polymer).

13. The use of purified poly(ethylene 2,5-furandicarboxylate) produced by the process as described in claims 1 to 6 in the production of films, bottles or pieces.

14. The use of polyester blends according to claims 10 to 12 in the production of films, bottles or pieces.

## Patentansprüche

1. Verfahren zur Herstellung von Poly(ethylen-2,5-furandicarboxylat) aus 2,5-Furandicarboxylsäure, die folgenden Schritte umfassend:
(1) Verestern von 2,5-Furandicarboxylsäure mit Ethylenglycol im Beisein von 3,4-Furandicarboxylsäure und Triol im Beisein mindestens eines Katalysators, um eine Verbindung zu erhalten, die anschließend
(2) einer Polykondensation im Beisein mindestens eines Katalysators unterzogen wird.

2. Verfahren nach Anspruch 1, wobei es sich bei dem im Schritt (1) verwendeten Triol um tris-Hydroxymethylpropan handelt und/oder wobei es sich bei dem in den Schritten (1) oder (2) verwendeten Katalysator um Titanisopropoxid und/oder Antimonoxid handelt.

3. Verfahren nach Anspruch 1, wobei die im Schritt (1) verwendete 2,5-Furandicarboxylsäure zuvor durch Fraktionierungs- und Waschschritte gereinigt wird, wobei das Waschen vorzugsweise zweimal mit Eiswasser und fünfmal mit Raumtemperaturwasser erfolgt.

4. Verfahren nach Anspruch 3, wobei die Fraktionierung erfolgt, indem der pH auf 5 - 6 eingestellt wird und gefiltert wird, um den ersten Teil des Präzipitats zu entfernen.

5. Verfahren nach Anspruch 4, einen zweiten Schritt umfassend, wobei die Lösung auf einen pH von 1 - 2 eingestellt wird, um eine Gesamtausfällung zu erhalten, bevor auf 10°C abgekühlt und gefiltert wird, um gereinigte 2,5-Furandicarboxylsäure zu erhalten.

6. Verfahren nach einem der Ansprüche 4 oder 5, wobei der pH durch Zusetzen von konzentriertem HCl gesteuert wird.

7. Poly(ethylen-2,5-furandicarboxylat), das durch den Prozess nach einem der Ansprüche 1 bis 6 erhalten ist.

8. Poly(ethylen-2,5-furandicarboxylat) nach Anspruch 7, mit einem Zahlenmittel des Molekulargewichts (Mn) im Bereich zwischen 35.000 und 46.000 gmol⁻¹.

9. Poly(ethylen-2,5-furandicarboxylat) nach Anspruch 7, mit mindestens einer der folgenden Kenneigenschaften:
- 90 - 99 Mol-% 2,5-Furandicarboxylsäure und 1 bis 10 Mol-% 3,4-Furandicarboxylsäure (Disäurebestandteil), und 95 bis 99,8 Mol-% Ethylenglycol und 5 bis 0,2 Mol-% tris-Hydroxymethylpropan (Diolbestandteil),
- Zahlenmittel des Molekulargewichts (Mn) 30.000 bis 80.000, insbesondere 30.000 bis 60.000,
- Gewichtsmittel des Molekulargewichts (Mw) 60.000 bis 240.000, insbesondere 70.000 bis 180.000,
- Polydispersität 2 bis 4, insbesondere 2,4 bis 3,8,
- Tg zwischen 78 und 92°C.

10. Polyestermischungen mit dem Polymer nach einem der Ansprüche 7 bis 9 und mindestens einem zweiten Polymer, das einen Schmelzpunkt zwischen 130 und 300°C aufweist; oder Polyethylenterephthalat.

11. Polyestermischungen nach Anspruch 10, wobei mindestens ein zweites Polymer einen Schmelzpunkt zwischen 180 und 260°C aufweist.

12. Polyestermischungen nach einem der Ansprüche 10 oder 11, wobei das Verhältnis zwischen dem Polymer nach einem der Ansprüche 7 bis 9 und dem zweiten Polymer von ca. 99:1 pro Gewicht (Poly(ethylen-2,5-furandicarboxylat: zweites Polymer) bis 50:50 pro Gewicht (Poly(ethylen-2,5-furandicarboxylat: zweites Polymer) reicht.

13. Verwendung von gereinigtem Poly(ethylen-2,5-furandicarboxylat), das durch das wie in den Ansprüchen 1 bis 6 beschriebene Verfahren hergestellt ist, in der Produktion von Folien, Flaschen oder Teilen.

14. Verwendung von Polyestermischungen nach den Ansprüchen 10 bis 12 in der Produktion von Folien, Flaschen oder Teilen.

## Revendications

1. Procédé de production de poly(2,5-furanedicarboxylate d'éthylène) à partir d'acide 2,5-furanedicarboxylique comprenant les étapes suivantes :
(1) estérification d'acide 2,5-furanedicarboxylique avec de l'éthylène glycol en présence d'acide 3,4-furanedicarboxylique et de triol en présence d'au moins un catalyseur afin d'obtenir un composé qui est ensuite soumis à une
(2) polycondensation en présence d'au moins un catalyseur.

2. Procédé, selon la revendication 1, dans lequel le triol utilisé lors de l'étape (1) est du tris hydroxy méthyl propane, et/ou dans lequel le catalyseur utilisé lors des étapes (1) ou (2) est de l'isopropoxyde de titane et/ou de l'oxyde d'antimoine.

3. Procédé, selon la revendication 1, dans lequel l'acide 2,5-furanedicarboxylique utilisé lors de l'étape (1) est préalablement purifié au cours d'étapes de fractionnement et de lavage, de préférence dans lequel le lavage est réalisé deux fois avec de l'eau glacée et cinq fois avec de l'eau à température ambiante.

4. Procédé, selon la revendication 3, dans lequel le fractionnement est réalisé par ajustement du pH à 5-6 et par filtration pour éliminer la première partie du précipité.

5. Procédé, selon la revendication 4, comprenant une seconde étape dans laquelle la solution est ajustée au pH 1-2 pour obtenir une précipitation totale, avant refroidissement à 10 °C et filtration pour obtenir de l'acide 2,5-furanedicarboxylique purifié.

6. Procédé, selon l'une quelconque des revendications 4 ou 5, dans lequel le pH est contrôlé en ajoutant de l'HCl concentré.

7. Poly(2,5-furanedicarboxylate d'éthylène) obtenu par le procédé selon l'une quelconque des revendications 1 à 6.

8. Poly(2,5-furanedicarboxylate d'éthylène) selon la revendication 7 présentant un poids moléculaire moyen en nombre (Mn) dans la région de 35 000 et 46 000 gmol⁻¹.

9. Poly(2,5-furanedicarboxylate d'éthylène), selon la revendication 7, comprenant au moins l'une des caractéristiques suivantes :
- de 90 à 99 % en moles d'acide 2,5-furanedicarboxylique et de 1 à 10 % en moles d'acide 3,4-furanedicarboxylique (composant diacide), et de 95 à 99,8 % en moles d'éthylène glycol et de 5 à 0,2 % en moles de tris hydroxy méthyl propane (composant diol),
• Poids moléculaire moyen en nombre (Mn) de 30 000 à 80 000, en particulier de 30 000 à 60 000
• Poids moléculaire moyen en poids (Mw) de 60 000 à 240 000, en particulier de 70 000 à 180 000,
• Polydispersité de 2 à 4, en particulier de 2,4 à 3,8,
• Tg entre 78 et 92 °C.

10. Mélanges de polyester comprenant le polymère selon l'une quelconque des revendications 7 à 9 et au moins un second polymère présentant un point de fusion situé entre 130 et 300 °C ; ou un téréphtalate de polyéthylène.

11. Mélanges de polyester, selon la revendication 10, dans lesquels au moins un second polymère présente un point de fusion situé entre 180 et 260 °C.

12. Mélanges de polyester, selon l'une quelconque des revendications 10 ou 11, dans lesquels le rapport entre le polymère selon l'une quelconque des revendications 7 à 9 et le second polymère est situé dans la plage d'environ 99/1 en poids de (poly(2,5-furanedicarboxylate d'éthylène/second polymère) à 50/50 en poids de (poly(2,5-furanedicarboxylate d'éthylène/second polymère).

13. Utilisation de poly(2,5-furanedicarboxylate d'éthylène) purifié produit par le procédé selon les revendications 1 à 6 afin de produire des films, des bouteilles ou des pièces.

14. Utilisation de mélanges de polyester selon les revendications 10 à 12 afin de produire des films, des bouteilles ou des pièces.
